# DEMANDE DE BREVET EUROPEEN

(11) **EP 0 913 877 A1**
(43) Date de publication de la demande: **06.05.1999**
(21) Numéro de dépôt: 98402520.5
(22) Date de dépôt: 12.10.1998
(51) Int. Cl.: H01M 10/48

(54) **Batterie monobloc contenant un dispositif de mesure de la température interne**

(30) Priorité: 20.10.1997 FR 9713094
(71) Demandeur: ALCATEL, 75008 Paris (FR)
(72) Inventeur: Verhoog, Roelof, 60190 Gournay sur Aronde (FR); Genton, Alain, 33290 Parempuyre (FR)
(74) Mandataire: Laroche, Danièle

(57) **Abrégé**

La présente invention est une batterie monobloc étanche comprenant un conteneur comportant au moins une paroi et divisé en alvéoles contiguës, destinées à recevoir des faisceaux électrochimiques, par au moins une cloison solidaire de ladite paroi, et un dispositif de mesure de la température desdits faisceaux, caractérisé en ce que ledit dispositif est constitué par au moins un moyen de mesure placé dans un logement aménagé dans l'épaisseur d'au moins une desdites cloisons, de telle sorte que l'ouverture dudit logement soit située sur la face externe de ladite paroi.

## Description

La présente invention concerne une batterie monobloc comprenant un dispositif destiné à mesurer la température des faisceaux électrochimiques contenus dans les alvéoles de la batterie.

Dans un concept de type monobloc, les éléments d'accumulateurs sont contenus dans les alvéoles d'un seul conteneur séparées par des cloisons. Le conteneur est généralement en matière plastique et de forme prismatique. Chaque élément d'accumulateur est un faisceau électrochimique constitué par l'assemblage alternatif d'électrodes positives et négatives séparées les unes des autres par un séparateur.

Au cours des charges et décharges successives que subit le faisceau électrochimique, sa température varie. Le suivi de la température permet de contrôler la durée de la charge (ou de la décharge). De la qualité de la mesure de température dépend la précision dans la détection de la fin de la charge. On limite ainsi la surcharge et la durée de vie de la batterie est prolongée. En outre, lorsqu'un dysfonctionnement se produit, la température du faisceau électrochimique peut s'élever brusquement. La sécurité de l'utilisateur dépend de la vitesse de détection de cette anomalie thermique. De plus on adjoint généralement à une batterie monobloc un dispositif de refroidissement dont il est nécessaire de contrôler l'efficacité.

La mesure s'effectue couramment par un sonde de température fixée sur l'une des faces extérieures de la batterie monobloc par un agent adhésif. Ainsi placée la sonde ne permet pas une mesure de la température réelle des faisceaux, et elle subit toutes les perturbations thermiques extérieures à la batterie. En outre la sonde risque de se détacher de la paroi du conteneur.

Le document EP-0 638 951 décrit une batterie monobloc à laquelle a été ajouté un compartiment terminal destiné à accueillir un dispositif de sécurité comportant un capteur de température. Le capteur est supporté par une pièce à rebord placée en relief sur la cloison séparant le compartiment terminal de l'alvéole adjacente qui contient un faisceau électrochimique. Cette disposition présente plusieurs inconvénients. D'une part la précision de la température mesurée ainsi est insuffisante. Dans cette position le compartiment situé à l'extrémité de la batterie est exposé aux fluctuations de la température extérieure. Le capteur réagit aux variations de température du faisceau adjacent, mais sa sensibilité thermique vis à vis des faisceaux suivants est moindre. D'autre part la détection des variations de température s'effectue avec du retard. Le chemin thermique à parcourir entre le faisceau et le capteur est long, notamment pour les faisceaux se trouvant à l'autre extrémité de la batterie. En outre l'addition du compartiment terminal augmente notablement l'encombrement de la batterie et pénalise sa capacité volumique.

Le document EP-0 739 048 propose de placer un capteur de température dans un orifice aboutissant à proximité de la partie supérieure du faisceau électrochimique, l'orifice est ensuite obturé par un adhésif. La distance séparant le capteur de la partie supérieure du faisceau peut varier en fonction des tolérances dimensionnelles sur la hauteur des électrodes. Bien que cette disposition permette de mesurer une température très proche de la température réelle du faisceau, la conduction qui s'effectue uniquement par rayonnement n'offre pas une détection suffisamment précise des variations de température. En outre la composition du mélange gazeux situé au dessus du faisceau électrochimique varie au cours du cyclage, il est notamment plus riche en hydrogène en fin de charge et il peut être modifié en cas d'ouverture de la soupape de sécurité. Enfin le volume occupé par le dispositif de mesure de la température est encore trop important.

Le besoin se fait sentir d'une batterie monobloc de capacité volumique au moins égale à celle des batteries actuellement connue et de durée de vie allongée. Cette batterie doit aussi présenter une sécurité accrue pour l'utilisateur.

La présente invention a pour but de proposer une batterie monobloc comportant un dispositif de moindre encombrement pour mesurer la température des faisceaux électrochimiques, telle que la mesure de la température interne et le suivi de sa variation soient réalisés de manière plus fiable, plus rapide et plus précise que pour les batteries connues.

L'objet de la présente invention est une batterie monobloc étanche comprenant un conteneur comportant au moins une paroi et divisé en alvéoles contiguës, destinées à recevoir des faisceaux électrochimiques, par au moins une cloison solidaire de ladite paroi, et un dispositif de mesure de la température desdits faisceaux, caractérisé en ce que ledit dispositif est constitué par au moins un moyen de mesure placé dans un logement aménagé dans l'épaisseur d'au moins une desdites cloisons, de telle sorte que l'ouverture dudit logement soit située sur la face externe de ladite paroi.

Les faisceaux électrochimiques sont placés dans les alvéoles au contact des cloisons. Les calories produites au sein du faisceau d'électrodes sont transportées vers sa surface extérieure, notamment grâce à l'électrolyte qui imprègne les électrodes et le séparateur. Le transfert thermique du faisceau vers le moyen de mesure s'effectue principalement par conduction dans la partie de la cloison au contact direct du faisceau. Secondairement, dans la partie de la cloison située au-dessus du faisceau, il s'effectue par contact indirect par l'intermédiaire des séparateurs imbibés d'électrolyte et/ou par rayonnement.

Chaque cloison est donc soumise aux modifications de la température des faisceaux qui l'encadrent. Le logement aménagé dans l'épaisseur d'une cloison se trouve ainsi en contact thermique étroit avec la surface des faisceaux adjacents. Sa température est pratiquement identique à celle des faisceaux et en subit immédiatement la moindre variation car le chemin thermique est court. Le moyen de mesure qui y est placé donne ainsi une mesure précise de la température instantanée des faisceaux. La partie du logement contenant la partie sensible du moyen de mesure est entièrement contenue dans la cloison : il n'a aucun contact avec l'extérieur du conteneur et ne subit pas les perturbations thermiques de l'environnement.

La création de ce logement n'entraîne aucune augmentation du volume de la batterie. De préférence le logement est réalisé de manière à ce que la sur-épaisseur de la cloison se situe au-dessus du niveau de la face supérieure du faisceau d'électrodes, occupant ainsi un espace habituellement inoccupé. Afin d'obtenir une mesure de température la plus précise possible, on peut équiper la batterie de plusieurs logements judicieusement répartis, chacun contenant un moyen de mesure, sans diminuer sa capacité volumique.

L'accès au logement s'effectue par la face extérieur de la paroi, au droit de la cloison. Le moyen de mesure est donc en permanence accessible depuis l'extérieur de la batterie. Il peut donc être aisément vérifié ou changé si nécessaire.

Le moyen de mesure peut être notamment un capteur de température, par exemple un transistor ou un thermocouple. Son extrémité peut être par exemple de section circulaire, ovale, carrée ou rectangulaire.

Afin de minimiser la sur-épaisseur de la cloison au niveau du logement, son extrémité est de préférence aplatie. Ainsi on peut donner au logement la forme générale d'un parallélépipède rectangle, dont les petits côtés sont rectilignes ou incurvés, les grands côtés étant parallèles aux faces de la cloison.

Pour réduire encore l'encombrement du moyen de mesure au niveau du faisceau, on peut prolonger l'extrémité du capteur plongeant dans le logement par un conducteur thermique de dimension moindre, dont le rôle est de transporter les calories jusqu'au capteur. De préférence il s'agit d'un conducteur de faible section, éventuellement aplati.

Selon un mode de réalisation préférentiel, ladite paroi est horizontale. Cette disposition autorise la mise en batterie des monoblocs en les accolant les uns aux autres par leurs faces verticales. Dans ce cas la face supérieure horizontale des batteries peut porter non seulement l'ouverture de logements accueillant un moyen de mesure de la température, mais aussi les bornes d'entrée et de sortie du courant, un ou plusieurs orifices pour le remplissage en électrolyte, des soupapes de sécurité en cas de sur-pression, éventuellement des tubulures pour l'entrée et la sortie du fluide caloporteur, etc ...

De préférence encore ladite paroi et ladite cloison sont constituées d'une même pièce. Les parois et les cloisons du conteneur sont moulées d'une seule pièce. Après introduction des faisceaux, le fond constituant une pièce séparée est rapporté et thermosoudé.

La batterie monobloc selon la présente invention est notamment utilisée pour le démarrage et la traction de véhicules (chemin de fer, véhicule routier tel qu'une automobile ou un deux-roues, etc...) et le secours (éclairage, chemin de fer). Le concept monobloc permet un gain important en énergie volumique et massique particulièrement avantageux dans le cas d'un véhicule électrique. Il peut s'agir notamment d'une batterie d'accumulateurs au plomb, au nickel ou au lithium.

L'invention sera mieux comprise et d'autres avantages et particularités apparaîtront à la lecture de la description qui va suivre, donnée à titre non limitatif, accompagnée des dessins annexés parmi lesquels:
- la figure 1 représente une batterie monobloc selon la présente invention comprenant un dispositif de mesure de la température ;
- la figure 2 est une vue en coupe partielle verticale de la batterie ;
- la figure 3 est une vue perspective partielle coupée selon III-III du dispositif de mesure de la température de la batterie ;
- la figure 4 représente l'évolution de la température de la batterie monobloc de la figure 1 mesurée au niveau de plusieurs cloisons, la température T en °C est donnée en ordonnée et en abscisse le temps t en minutes ;
- la figure 5 est une vue en coupe partielle horizontale d'une variante d'une batterie monobloc selon l'invention, comprenant un dispositif de mesure de la température ;
- la figure 6 est une vue perspective partielle coupée selon VI-VI du dispositif de mesure de la température de la batterie de la figure 5 ;
- la figure 7 est une vue en coupe partielle verticale d'une autre variante d'une batterie monobloc selon l'invention, comprenant un dispositif de mesure de la température.

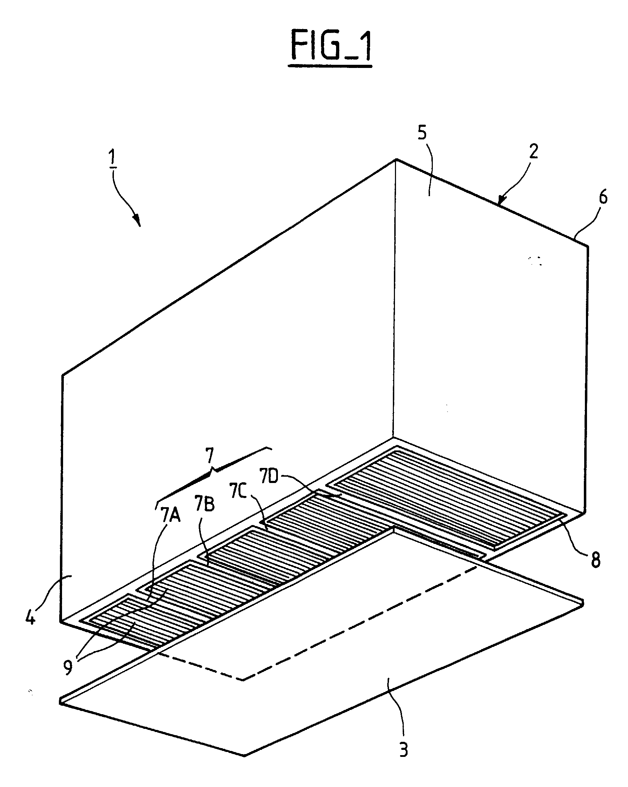

La batterie 1 monobloc selon l'invention représentée sur la figure 1 comprend un conteneur composé d'un bac 2 formé d'une seule pièce et d'un fond 3 qui est thermosoudé sur le bac 2 pour assurer l'étanchéité de la batterie 1. Le bac 2 comporte des parois longitudinales 4, des parois latérales 5 et une paroi supérieure transversale 6. Il est divisé par des cloisons 7 perpendiculaires et solidaires des parois longitudinales 4 et transversale 6. Les cloisons délimitent des alvéoles 8 contiguës contenant des faisceaux électrochimiques 9.

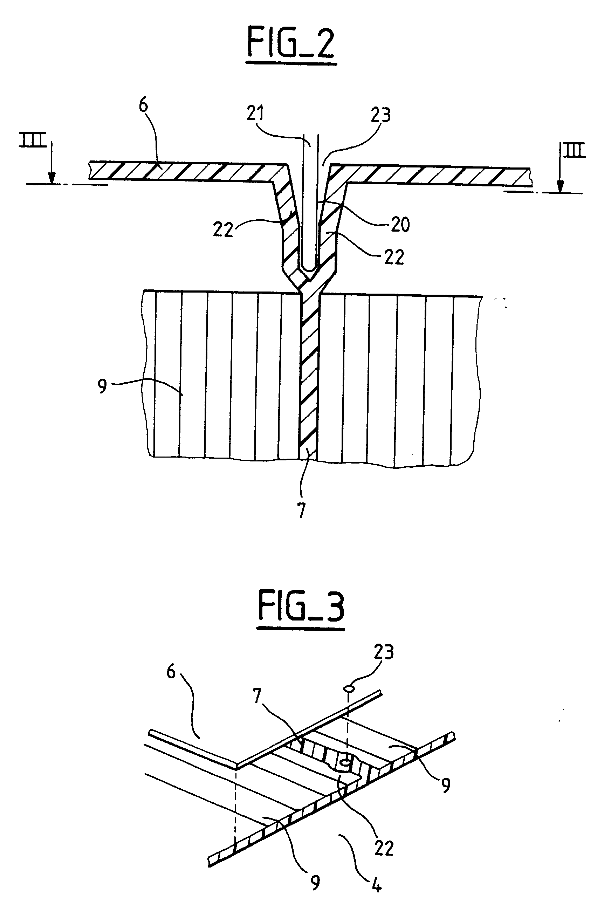

Selon une première variante de l'invention, un logement 20 est aménagé dans au moins une des cloisons 7 pour accueillir un capteur 21 comme le montrent la coupe verticale de la figure 2. Ce logement 20 est limité par deux demi-cloisons 22 situées dans le prolongement de la cloison 7. Il a une profondeur d'environ 1 à 2mm. La coupe horizontale de la figure 3 montre que le logement 20 débouche sur la paroi supérieure 6 par une ouverture 23 délimitée par l'écartement des deux demi-cloisons 22. Des séparateurs non représentés émergeant de la partie supérieure du faisceau sont en contact avec les demi-cloisons 22.

Cette disposition présente l'avantage de permettre d'assembler plusieurs monoblocs en les plaçant l'un à côté de l'autre, la mesure de température s'effectuant sur le dessus des monoblocs. Les parois longitudinales 4 peuvent être munies d'un dispositif de refroidissement, par exemple celui décrit dans la demande de brevet européen EP-0 596 778.

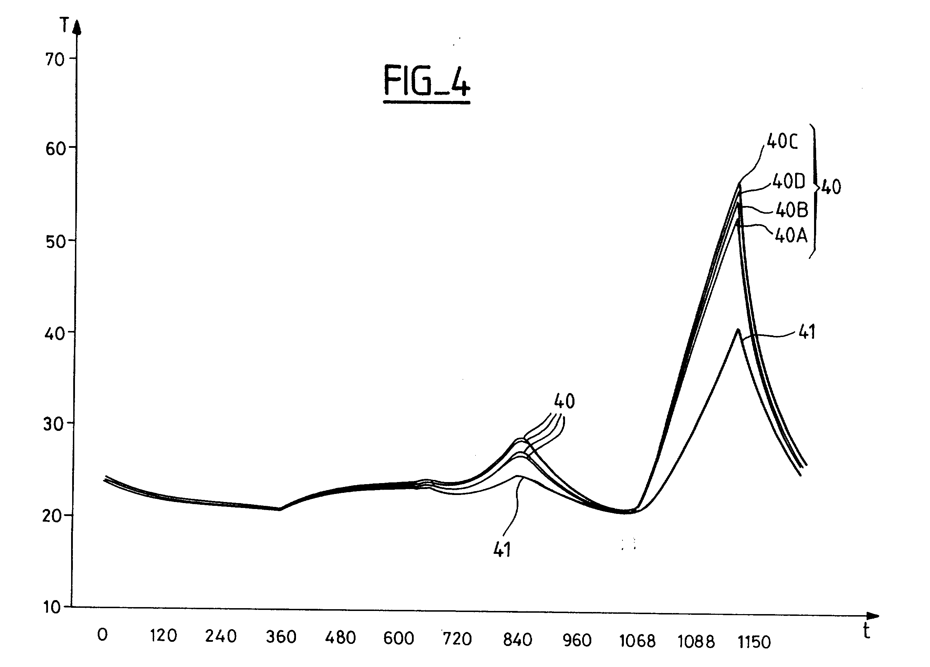

On mesure l'évolution de la température interne d'une batterie selon l'invention ayant le dispositif de mesure de la température représenté sur les figures 2 et 3 qui est placé sur chacune des cloisons référencées 7A à 7D. La mesure de température est effectuée au cours d'une décharge au régime de 2lc (où lc est le courant nécessaire pour décharger la capacité nominale de la batterie en une heure) qui suit une charge à 0,2lc suivie d'une surcharge à 0,05lc. Les courbes 40A à 40D de la figure 4 représentent la variation de température mesurée respectivement au niveau des cloisons 7A à 7D.

A titre de comparaison (courbe 41) on a enregistré la variation de température mesurée par une sonde placée sur la face externe de la paroi 5. Les températures mesurées sont très proches au début de la décharge (t < 720mn). Lorsqu'une élévation importante et rapide de la température se produit au sein des faisceaux, la courbe 41 ne restitue pas une variation d'aussi grande amplitude que les courbes 40 (t ≈ 840mn ou 1098mn). Après environ 1098 minutes de décharge, la différence de température lue sur les courbes 40 d'une part et la courbe 41 d'autre part peut dépasser 15°C.

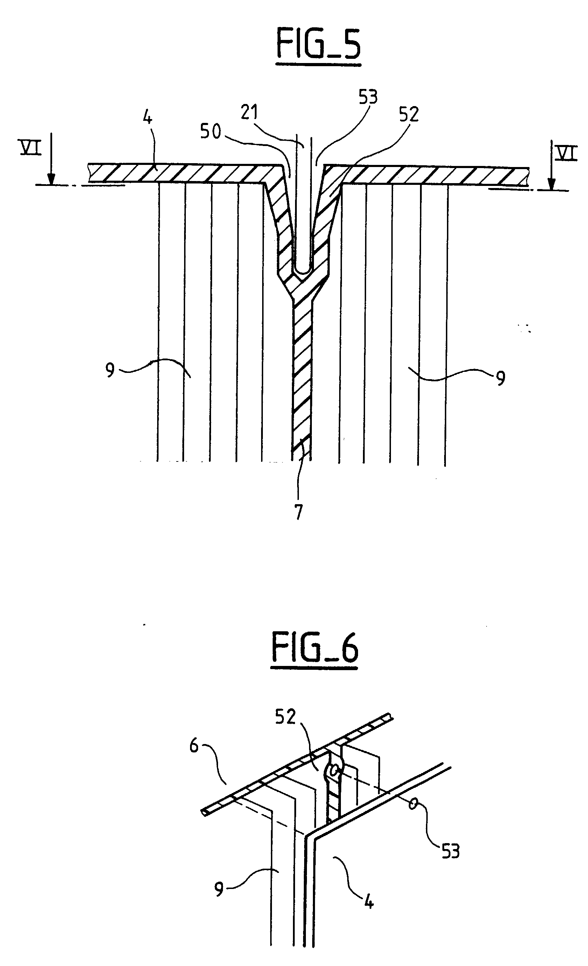

La figure 5 représente une autre variante de la batterie selon l'invention dans laquelle la sonde 21 est placée dans un logement 50 limité par deux demi-cloisons 52. Le logement 50 débouche sur la paroi longitudinale 4 par une ouverture 53 visible sur la coupe de la figure 6.

Selon encore une autre variante non représentée, la sonde 21 peut être placée dans un logement débouchant sur le fond 3. L'ouverture portée par le fond 3 doit être précisément placée dans l'alignement du logement dans la cloison 7 au moment de la réalisation de la thermosoudure.

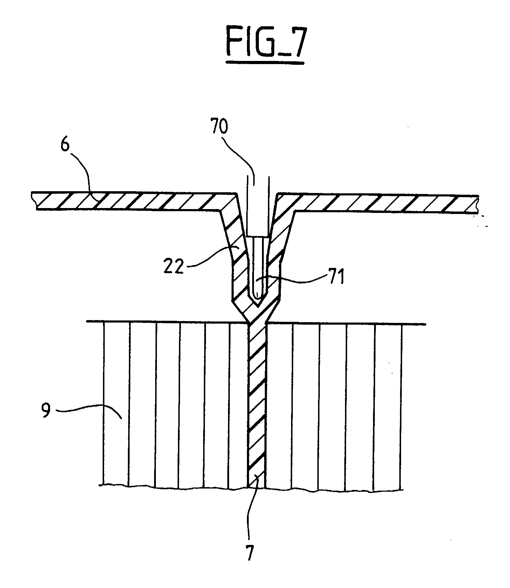

Dans le cas où l'encombrement du capteur 70 est encore trop important, il peut être prolongé par un conducteur thermique 71 de plus faible section, comme le montre la figure 7.

## Revendications

1. Batterie monobloc étanche comprenant un conteneur comportant au moins une paroi et divisé en alvéoles contiguës, destinées à recevoir des faisceaux électrochimiques, par au moins une cloison solidaire de ladite paroi, et un dispositif de mesure de la température desdits faisceaux, caractérisé en ce que ledit dispositif est constitué par au moins un moyen de mesure placé dans un logement aménagé dans l'épaisseur d'au moins une desdites cloisons, de telle sorte que l'ouverture dudit logement soit située sur la face externe de ladite paroi.

2. Batterie selon la revendication 1, dans laquelle ledit moyen de mesure est un capteur de température.

3. Batterie selon la revendication 2, dans laquelle l'extrémité dudit capteur est aplatie.

4. Batterie selon la revendication 3, dans laquelle ledit logement a une section transversale ayant la forme générale d'un parallélépipède rectangle.

5. Batterie selon l'une des revendications précédentes, dans laquelle ledit capteur est prolongé par un conducteur thermique.

6. Batterie selon l'une des revendications précédentes, dans laquelle ladite paroi est horizontale.

7. Batterie selon la revendication 6, dans laquelle ladite paroi et ladite cloison sont constituées d'une même pièce.
